# EUROPÄISCHE PATENTSCHRIFT

(11) **EP 0 637 360 B1**
(45) Veröffentlichungstag und Bekanntmachung des Hinweises auf die Patenterteilung: **13.09.1995**
(21) Anmeldenummer: 93922317.8
(22) Anmeldetag: 18.03.1993
(51) Int. Cl.: F01N 3/20, F01N 3/28, H05B 3/12

(54) **ELEKTRISCH LEITFÄHIGER WABENKÖRPER, INSBESONDERE FÜR ELEKTRISCH BEHEIZBARE KATALYTISCHE KONVERTER VON KRAFTFAHRZEUGEN**
ELECTRICALLY CONDUCTIVE HONEYCOMB STRUCTURE FOR ELECTRICALLY HEATABLE CATALYTIC CONVERTERS FOR MOTOR VEHICLES
CORPS ALVEOLAIRE ELECTROCONDUCTEUR, NOTAMMENT POUR LES CONVERTISSEURS CATALYTIQUES DE VEHICULES AUTOMOBILES

(30) Priorität: 22.04.1992 DE 4213261
(43) Veröffentlichungstag der Anmeldung: 08.02.1995
(73) Patentinhaber: Emitec Gesellschaft für Emissionstechnologie mbH, 53797 Lohmar (DE)
(72) Erfinder: Maus, Wolfgang, D-5060 Bergisch Gladbach 1 (DE)
(74) Vertreter: Kahlhöfer, Hermann, Dipl.-Phys.
(86) Internationale Anmeldenummer: EP9300640
(87) Internationale Veröffentlichungsnummer: WO9321430

(56) Entgegenhaltungen:
- EP-A- 0 452 125
- EP-A- 0 502 731

## Beschreibung

Elektrisch leitfähiger Wabenkörper, insbesondere für elektrisch beheizbare katalytische Konverter von Kraftfahrzeugen
Die vorliegende Erfindung betrifft einen Wabenkörper aus elektrisch leitfähigem Material, welcher durch Schlitze und/oder elektrisch isolierende Schichten elektrisch so unterteilt ist, daß ein elektrischer Strom auf einem gewundenen Pfad durch den Körper fließen kann.

Solche Körper sind beispielsweise aus der WO 89/10470, der WO89/10471 oder der EP 0 452 125 A2 bekannt.

In der EP 0 452 125 A2, von der die vorliegende Erfindung ausgeht, sind viele verschiedene Möglichkeiten zur Unterteilung eines Wabenkörpers durch Schlitze beschrieben. Es hat sich jedoch gezeigt, daß ein elektrischer Strom, welchem man einen mäanderförmigen Weg aufzwingt, immer die Tendenz hat, sich den kürzesten Weg, d. h. den Weg mit dem geringsten elektrischen Widerstand zu suchen. Ein wesentlicher Anteil des Stromes fließt daher in einem sehr kleinen Bereich nahe den die elektrische Leitfähigkeit begrenzenden Schlitzen oder Schichten. Typischerweise wird ein mäanderförmig von Strom durchflossener Wabenkörper der obengenannten Bauart nicht gleichmäßig aufgeheizt, sondern hat besonders heiße Stellen an den Innenseiten der jeweiligen Krümmungen des Strompfades. Hier kann es sogar zum Aufglühen, Durchschmelzen, zumindest aber zum Erweichen des Körpers kommen, was die Stabilität und die Lebersdauer beeinträchtigt. Insbesondere bei der Verwendung eines solchen Wabenkörpers als elektrisch beheizbarer katalytischer Konverter in einem Kraftfahrzeug ist dies von entscheidender Bedeutung, da hier hohe Belastungen auftreten und nur begrenzte elektrische Energie zur Verfügung steht, die möglichst optimal ausgenutzt werden soll.

In der EP 0 452 125 A2 sind verschiedene Möglichkeiten erwähnt, mit welchen der elektrische Widerstand in unterschiedlichen Teilbereichen des Körpers verändert werden soll. Hierzu gehören veränderte Wanddicken der einzelnen Waben, eine unterschiedliche Anzahl von Waben pro Querschnittsfläche oder eine unterschiedliche axiale Länge einzelner Zellwände. Solche Maßnahmen sind jedoch prinzipiell nicht geeignet, eine homogenere Verteilung des Stromes in einem elektrisch leitfähigen Wabenkörper zu erzielen Der Grund liegt darin, daß der spezifische elektrische Widerstand des Materials immer gleich bleibt, so daß durch die Anordnung von mehr oder weniger Material zwar der Widerstand in diesem Bereich, nicht jedoch die spezifische Stromdichte pro vorhandenem Material geändert werden kann. Erhöht man beispielsweise die Wanddicke in einem Bereich, in dem besonders hohe Ströme fließen, so reduziert sich dort der Widerstand und es fließen noch höhere Ströme, wodurch das dickere Material genauso aufgeheizt wird wie dünneres Material. Verringert man hingegen die Wanddicke oder die Zahl der Zellen, so fließt zwar ein geringerer Strom, jedoch heizt dieser die geringere Menge an vorhandenem Material genauso stark auf wie vorher. Sinngemäß das gleiche gilt auch für axial veränderliche Längen der Zellwände.

Aufgabe der vorliegenden Erfindung ist es, einen Wabenkörper aus elektrisch leitfähigem Material anzugeben, welcher die genannten Nachteile vermeidet und gleichmäßiger über seine gesamte Querschnittsfläche mit einem elektrischen Strom beaufschlagbar ist. Auch ein Verfahren zur Herstellung eines solchen Wabenkörpers ist Gegenstand der vorliegenden Erfindung.

Zur Lösung dieser Aufgabe dient ein Wabenkörper aus elektrisch leitfähigem Material, welcher durch Schlitze und/oder elektrisch isolierende Schichten elektrisch so unterteilt ist, daß ein elektrischer Strom auf einem gewundenen Pfad durch den Körper fließen kann, wobei der Wabenkörper aus Bereichen von unterschiedlichem Material mit unterschiedlichem spezifischen Widerstand besteht. Das Wesen der vorliegenden Erfindung besteht darin, daß bei vorgegebener Zellgeometrie, die nicht notwendigerweise homogen sein muß, die Stromverteilung in dieser vorgegebenen Zellgeometrie durch Variation des spezifischen elektrischen Widerstandes ohne wesentliche Änderung der durch die vorgegebene Zellgeometrie vorhandenen Masse in den einzelnen Bereichen erzielt wird. Auf diese Weise kann die Stromdichte in den Bereichen mit höherem spezifischen Widerstand verringert werden, wodurch Teile des Stromflusses in andere Bereiche verdrängt werden, wobei gleichzeitig in dem Bereich mit höherem spezifischen Widerstand keine übermäßige Aufheizung des Materials mehr auftritt, da die dort aufzuheizende Masse nicht gleichzeitig verringert werden muß.

Besonders einfach lassen sich Bereiche mit unterschiedlichem spezifischen Widerstand bei extrudierten Wabenkörpern aus Metallpulver oder einer Mischung aus Metall- und Keramikpulver herstellen. Durch unterschiedliche Zusammensetzung des Pulvermaterials in unterschiedlichen Bereichen des Wabenkörpers kann der spezifische Widerstand in weiten Grenzen eingestellt werden. So kann der spezifische Widerstand durch Verringerung des Metallpulveranteils in einem Metall- und Keramikpulvergemisch verringert werden. Auch durch unterschiedlich starke Oxydation und andere physikalisch-chemische Verfahren kann der elektrische Widerstand in Teilbereichen erhöht werden.

Ein so hergestellter Wabenkörper eignet sich besonders als Trägerkörper für katalytisch aktives Material und insbesondere für einen elektrisch beheizbaren katalytischen Konverter eines Kraftfahrzeuges. Gerade bei solchen Wabenkörpern kommt es auf eine homogene Beheizung zur wirtschaftlichen Ausnutzung der vorhandenen elektrischen Energie und auf Stabilität und lange Lebensdauer unter schwierigen Betriebsbedingungen an.

Geeignet ist die Erfindung beispielsweise für einen Wabenkörper, der durch mehrere etwa parallele, aber gegeneinander versetzte Schlitze so unterteilt ist, daß ein elektrischer Strom etwa mäanderförmig durch den Körper fließen kann. Dabei haben die Schlitze im allgemeinen Enden im Inneren des Wabenkörpers. Wenn der Wabenkörper zumindest im Bereich dieser Enden der Schlitze aus einem Material mit einem höheren spezifischen Widerstand als in den übrigen Bereichen besteht, so wird ein Teil des elektrischen Stromes aus diesem Bereich verdrängt und einen Überhitzung dort vermieden. Dabei ist es nicht zwingend erforderlich, daß die Bereiche mit einem höheren spezifischen Widerstand zusammenhängen und einen einzigen großen Bereich bilden, jedoch wird dies im allgemeinen für die Herstellung vorteilhaft sein. Auf die genaue Form eines solchen Bereiches mit höherem spezifischen Widerstand kommt es nicht an, solange nur in der Nähe der Enden der Schlitze der Widerstand genügend erhöht ist.

Aus herstellungstechnischen Gründen, insbesondere bei extrudierten Wabenkörpern ist die Erfindung besonders gut auf einen zylindrischen oder ovalzylindrischen Waberkörper mit etwa axial verlaufenden Schlitzen anzuwenden, wobei die Schlitze jeweils versetzt etwa parallel zu einem Radius liegen und von außen bis zu ihrem Ende im Inneren des Wabenkörpers reichen. Dabei besteht der Wabenkörper in seinem inneren Querschnittsbereich, der zumindest alle Enden der Schlitze umfaßt, aus einem Material mit höherem spezifischen Widerstand als in seinem äußeren Querschnittsbereich. Wie anhand der Zeichnung näher erläutert wird, läßt sich ein solcher Waberkörper durch Extrudieren leicht herstellen.

Der Gesamtwiderstand eines solchen Wabenkörpers kann beispielsweise im Bereich von etwa 0,01 bis etwa 1 Ohm liegen, was der typische Bereich für beheizbare katalytische Konverter in Kraftfahrzeugen ist, insbesondere bei elektrischen Anlagen mit einer Spannung von 12 bis 24 Volt.

Obwohl sich der spezifische elektrische Widerstand, z. B. bei extrudierten Wabenkörpern, in weiten Grenzen variieren läßt, so ist es doch vorteilhaft, daß der höhere spezifische elektrische Widerstand etwa doppelt so groß ist wie der elektrische spezifische Widerstand in den Bereichen mit niedrigerem spezifischen elektrischen Widerstand. Prinzipiell können natürlich auch mehr als zwei unterschiedliche Bereiche mit unterschiedlichem spezifischen elektrischen Widerstand oder eine kontinuierliche Variation des spezifischen elektrischen Widerstandes in einem Wabenkörper vorhanden sein. Ein erfindungsgemäßes Verfahren zur Herstellung eines Wabenkörpers mit Bereichen unterschiedlicher spezifischer elektrischer Widerstände, insbesondere zur Herstellung der oben beschriebenen Wabenkörper, besteht aus folgenden Schritten:
a) einem Etruder werden zwei unterschiedliche Massen aus Metallpulver oder Metall- und Keramikpulvergemisch zugeführt, und zwar eine im inneren Bereich und eine in einem den inneren Bereich umgebenden äußeren Bereich;
b) die unterschiedlichen Massen werden gemeinsam zu einem monolithischen Wabenkörper extrudiert;
c) der extrudierte Wabenkörper wird gebrannt oder gesintert oder, ggf. nach Bereichen unterschiedlich, physikalisch-chemisch behandelt;
d) der extrudierte Wabenkörper wird mit versetzten Schlitzen versehen.

Die Reihenfolge dieser Schritte kann auch unterschiedlich sein, z. B. kann der Wabenkörper schon beim Extrudieren oder direkt anschließend mit Schlitzen versehen werden, bevor die übrigen Schritte erfolgen. Auch können mehr als zwei unterschiedliche Massen eingesetzt werden, die dann ineinanderliegende Bereiche mit unterschiedlichem spezifischen elektrischen Widerstand bilden. Unter unterschiedlichen Massen ist nicht unbedingt zu verstehen, daß die Massen eine wesentlich verschiedene Materialzusammenstellung oder Pulvergröße haben müssen. Unter Umständen kann es auch reichen, wenn einem Teil der Masse ein Additiv beigemischt wird, welches bei der späteren physikalisch-chemischen Behandlung z. B. eine stärkere Oxydation hervorruft, wodurch der spezifische Widerstand verringert wird. Im allgemeinen wird jedoch der unterschiedliche spezifische Widerstand durch unterschiedliche Anteile an keramischer Masse im Pulvergemisch erzielt werden können.

Ansführungsbeispiele der Erfindung werden anhand der Zeichnung näher erläutert, und zwar zeigen
- Figur 1: eine schematische, perspektivische Ansicht eines erfindungsgemäßen Wabenkörpers,
- Figur 2: die schematische Darstellung eines Querschnittes durch einen erfindungsgemäßen Wabenkörper und
- Figur 3: schematisch den Vorgang zur Herstellung eines erfindungsgemäßen extrudierten Wabenkörpers.

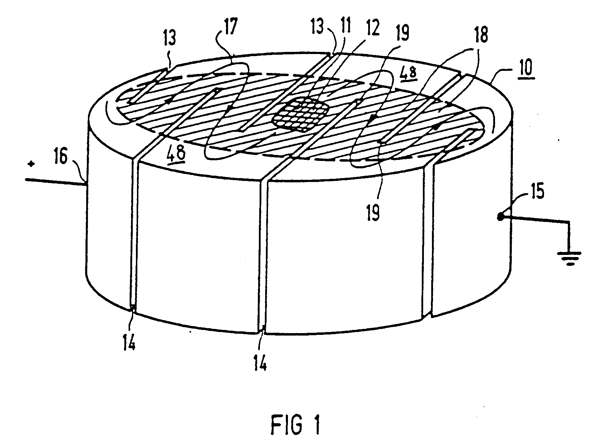

Figur 1 zeigt einen Wabenkörper 10, welcher aus einer Vielzahl von dünnen Wänden 11 besteht, welche zahlreiche Kanäle 12 bilden, durch welche ein Fluid in axialer Richtung strömen kann. Durch Schlitze 13, 14 ist der Wabekörper 10 elektrisch so unterteilt, daß ein elektrischer Strom, der an die Anschlüsse 15, 16 gelegt wird, mäanderförmig durch den Wabenkörper 10 fließt, wie durch die Wellenlinie 17 angedeutet ist. Im Inneren des Wabenkörpers ist ein Bereich 18 mit höherem spezifischen elektrischen Widerstand vorhanden, welcher insbesondere die Enden 19 der Schlitze 13, 14 umgibt. Auf dieser Weise wird der elektrische Strom 17, der normalerweise möglichst nahe an den Enden 19 vorbeifließen würde, von dort weiter nach außen verdrängt, wodurch eine Überhitzung vermieden und eine gleichmäßige Stromverteilung erreicht werden kann.

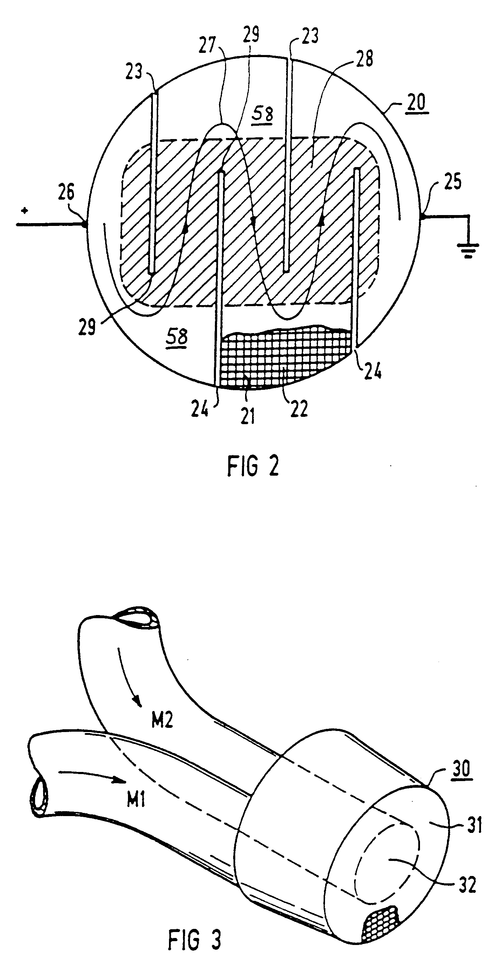

Figur 2 zeigt im Querschnitt für einen runden Wabenkörper anschaulich das Ergebnis der vorliegenden Erfindung. Der Wabenkörper 20 besteht wiederum aus einer Vielzahl von Kanälen 22, welche von Wänden 21 begrenzt sind. Schlitze 23, 24 unterteilen den Wabenkörper elektrisch, so daß er bei Anschluß einer Spannung an die Anschlüsse 25, 26 mäanderförmig von einem Strom 27 durchflossen wird. Ein Bereich höheren elektrischen Widerstandes 28 umgibt die Enden 29 der Schlitze 23, 24, so daß der elektrische Strom 27 von diesen Enden 29 nach außen verdrängt wird. Bei Ausnutzung dieses Effektes können unter Umständen die Schlitze 23, 24 kürzer sein als ohne einen Bereich 28 mit erhöhtem spezifischen Widerstand, was die Stabilität des ganzen Körpers von Vorteil ist.

Figur 3 zeigt schematisch den Vorgang beim Extrudieren eines erfindungsgemäßen Wabenkörpers. Einem Extruder 30 werden zwei unterschiedliche pulverförmige Massen M1, M2 zugeführt, und zwar in einem äußeren Bereich 31 die Masse M1 mit einem niedrigeren spezifischen elektrischen Widerstand und im inneren Bereich 32 eine Masse M2 mit einem höheren spezifischen elektrischen Widerstand. Tatsächlich spielt natürlich nicht der elektrische Widerstand der Massen bei der Extrudierung, sondern erst der später entstehende elektrische Widerstand nach dem Sintern oder einer anderweitigen Behandlung die entscheidende Rolle.

Die vorliegende Erfindung ermöglicht es, elektrisch beheizbare Wabenkörper, insbesondere für katalytische Konverter in Kraftfahrzeugen, herzustellen, welche eine weitgehend homogene Stromverteilung haben und Heißstellen in ihrem Inneren weitgehend vermeiden. Dadurch erhöht sich die Stabilität und Lebensdauer auch bei hohen mechanischen Anforderungen, wie sie in Kraftfahrzeugen auftreten.

## Patentansprüche

1. Wabenkörper (10; 20) aus elektrisch leitfähigem Material, welcher durch Schlitze (13, 14; 23, 24) und/oder elektrisch isolierende Schichten elektrisch so unterteilt ist, daß ein elektrischer Strom auf einem gewundenen Pfad (17; 27) durch den Körper (10; 20) fließen kann, dadurch gekennzeichnet, daß der Wabenkörper (10; 20) aus Bereichen (18, 48; 28, 58) von unterschiedlichem Material (M1, M2) mit unterschiedlichem spezifischen Widerstand besteht.

2. Wabenkörper nach Anspruch 1, dadurch gekennzeichnet, daß der Wabenkörper (10; 20) ein extrudierter Körper aus Metallpulver oder einer Mischung aus Metall- und Keramikpulver ist.

3. Wabenkörper nach Anspruch 1 oder 2, dadurch gekennzeichnet, daß der Wabenkörper 10; 20) ein Trägerkörper für katalytisch aktives Material ist, insbesondere für einen elektrisch beheizbaren katalytischen Konverter eines Kraftfahrzeuges.

4. Wabenkörper nach Anspruch 1, 2 oder 3, dadurch gekennzeichnet, daß der Wabenkörper (10; 20) durch mehrere etwa parallele, aber gegeneinander versetzte Schlitze (13, 14; 23, 24) so unterteilt ist, daß ein elektrischer Strom (17; 27) etwa mäanderförmig durch den Körper fließen kann.

5. Wabenkörper nach Anspruch 4, dadurch gekennzeichnet, daß die Schlitze (13, 14; 23, 24) Enden (19; 29) im Inneren des Wabenkörder Wabenkörper (10; 20) zumindest im Bereich (18; 28) der Enden (19; 29) der Schlitze (13, 14; 23, 24) aus einem Material (M1) mit einem höheren spezifischen Widerstand als in den übrigen Bereichen (48; 58) besteht.

6. Wabenkörper nach Anspruch 4 oder 5, dadurch gekennzeichnet, daß der Wabenkörper ein zylindrischer (20) oder ovalzylindrischer (10) Körper mit etwa axial verlaufenden Schlitzen (13, 14; 23, 24), welche jeweils versetzt etwa parallel zu einem Radius liegen und von außen bis zu einem Ende (19; 29) im Inneren des Wabenkörpers (10; 20) reichen, und daß der Wabenkörper (10; 20) in seinem inneren Querschnittsbereich (18; 28), der zumindest alle Enden (19; 29) der Schlitze (13, 14; 23, 24) umfaßt, aus einem Material (M2) mit höherem spezifischen Widerstand besteht als in seinem äußeren Querschnittsbereich (48; 58).

7. Wabenkörper nach einem der vorhergehenden Ansprüche, dadurch gekennzeichnet, daß der Wabenkörper (10; 20) einen elektrischen Gesamtwiderstand von 0,01 bis 1 Ohm aufweist.

8. Wabenkörper nach einem der vorhergehenden Ansprüche, dadurch gekennzeichnet, daß der Bereich (18; 28) mit dem höheren spezifischen elektrischen Widerstand einen mindestens etwa doppelt so großen spezifischen elektrischen Widerstand hat wie der Bereich (48; 58) mit dem niedrigeren spezifischen elektrischen Widerstand.

9. Verfahren zur Herstellung eines Wabenkörpers mit Bereichen (18, 48; 28, 58) unterschiedlicher spezifischer elektrischer Widerstände, nach einem der vorhergehenden Ansprüche, gekennzeichnet durch folgende Schritte:
a) einem Extruder (30) werden zwei unterschiedliche Massen (M1, M2) aus Metallpulver oder Metall-Keramikpulvergemisch zugeführt, und zwar eine im inneren Bereich (32) und eine in einem den inneren Bereich (32) umgebenden äußeren Bereich (31);
b) die unterschiedlichen Massen (M1, M2) werden gemeinsam zu einem monolithischen Wabenkörper (10; 20) extrudiert;
c) der extrudierte Wabenkörper (10; 20) wird gebrannt oder gesintert oder, ggf. nach Bereichen unterschiedlich, physikalisch-chemisch behandelt;
d) der extrudierte Wabenkörper (10; 20) wird mit versetzten Schlitzen (13, 14; 23, 24) versehen.

## Claims

1. A honeycomb body (10; 20) of electrically conductive material which is so electrically subdivided by slots (13, 14; 23, 24) and/or electrically insulating layers that an electrical current can flow through the body (10; 20) on a tortuous path (17; 27) characterised in that the honeycomb body (10; 20) comprises regions (18, 48; 28, 58) of different materials (M1, M2) of different resistivities.

2. A honeycomb body according to claim 1 characterised in that the honeycomb body (10; 20) is an extruded body of metal powder or a mixture of metal and ceramic powder.

3. A honeycomb body according to claim 1 or claim 2 characterised in that the honeycomb body (10; 20) is a carrier body for catalytically active material, in particular for an electrically heatable catalytic converter of a motor vehicle.

4. A honeycomb body according to claim 1, claim 2 or claim 3 characterised in that the honeycomb body (10; 20) is so subdivided by a plurality of approximately parallel but mutually displaced slots (13, 14; 23, 24) that an electrical current (17; 27) can flow approximately in a meander configuration through the body.

5. A honeycomb body according to claim 4 characterised in that the slots (13, 14; 23, 24) have ends (19; 29) in the interior of the honeycomb body (10; 20) and the honeycomb body (10; 20), at least in the region (18; 28) of the ends (19; 29) of the slots (13, 14; 23, 24), comprises a material (M1) with a higher resistivity than in the other regions (48; 58).

6. A honeycomb body according to claim 4 or claim 5 characterised in that the honeycomb body is a cylindrical (20) or oval-cylindrical (10) body with approximately axially extending slots (13, 14; 23, 24) which are respectively disposed in displaced relationship approximately parallel to a radius and extend from the outside to an end (19; 29) in the interior of the honeycomb body (10; 20) and that in its inner cross-sectional region (18; 28) which embraces at least all ends (19; 29) of the slots (13, 14; 23, 24), the honeycomb body (10; 20) comprises a material (M2) of higher resistivity than in its outer cross-sectional region (48; 58).

7. A honeycomb body according to one of the preceding claims characterised in that the honeycomb body (10; 20) has an overall electrical resistance of 0.01 to 1 ohm.

8. A honeycomb body according to one of the preceding claims characterised in that the region (18; 28) with the higher resistivity has a resistivity which is at least about double the region (48; 58) with the lower resistivity.

9. A process for the production of a honeycomb body with regions (18; 48; 28, 58) of different resistivities, according to one of the preceding claims, characterised by the following steps:
a) an extruder (30) is fed with two different masses (M1, M2) of metal powder or metal-ceramic powder mixture, are specifically one in the inner region (32) and one in an outer region (31) surrounding the inner region (32);
b) the different masses (M1, M2) are jointly extruded to give a monolithic honeycomb-body (10; 20);
c) the extruded honeycomb body (10; 20) is calcined or sintered or possibly differently according to the regions involved, subjected to physical-chemical treatment; and
d) the extruded honeycomb body (10; 20) is provided with displaced slots (13, 14; 23, 24).

## Revendications

1. Corps alvéolaire (10 ; 20) en matériau électriquement conducteur, qui est subdivisé par des fentes (13, 14 ; 23, 24) et/ou par des couches électriquement isolantes de telle sorte qu'un courant électrique (17 ; 27) puisse traverser le corps (10 ; 20) suivant un cheminement sinueux, caractérisé en ce que le corps alvéolaire (10 ; 20) est constitué de zones (18, 48 ; 28, 58) en différents matériaux (M1, M2) ayant une résistivité différente.

2. Corps alvéolaire selon la revendication 1, caractérisé en ce que le corps alvéolaire (10 ; 20) est un corps extrudé en poudre métallique ou en un mélange de poudre métallique et de poudre céramique.

3. Corps alvéolaire selon l'une des revendications 1 ou 2, caractérisé en ce que le corps alvéolaire (10 ; 20) est un corps de support pour un matériau catalytiquement actif, en particulier pour un convertisseur catalytique pouvant être chauffé électriquement d'un véhicule à moteur.

4. Corps alvéolaire selon l'une des revendications 1, 2 ou 3, caractérisé en ce que le corps alvéolaire (10 ; 20) est subdivisé par plusieurs fentes (13, 14 ; 23, 24) approximativement parallèles, mais décalées les unes par rapport aux autres, de telle sorte qu'un courant électrique (17 ; 27) puisse traverser le corps sous une forme approximativement sinusoïdale.

5. Corps alvéolaire selon la revendication 4, caractérisé en ce que les fentes (13, 14 ; 23, 24) ont des extrémités (19 ; 29) à l'intérieur du corps alvéolaire (10 ; 20), et en ce que le corps alvéolaire (10 ; 20), au moins dans la zone (18 ; 28) des extrémités (19 ; 29) des fentes (13, 14 ; 23, 24), est réalisé en un matériau (M1) ayant une résistivité plus élevée que celui des autres zones (48 ; 58).

6. Corps alvéolaire selon l'une des revendications 4 ou 5, caractérisé en ce que le corps alvéolaire est un corps cylindrique (20) ou cylindrique ovale (10) comportant des fentes (13, 14 ; 23, 24) évoluant à peu près axialement, qui sont respectivement décalées à peu près parallèlement à un rayon, et qui s'étendent de l'extérieur jusqu'à une extrémité (19 ; 29) à l'intérieur du corps alvéolaire (10 ; 20), et en ce que dans sa zone intérieure de section transversale (18 ; 28), qui englobe au moins toutes les extrémités (19 ; 29) des fentes (13, 14 ; 23, 24), le corps alvéolaire (10 ; 20) est constitué d'un matériau (M2) ayant une résistivité plus élevée que dans sa zone extérieure de section transversale (48 ; 58).

7. Corps alvéolaire selon l'une quelconque des revendications précédentes, caractérisé en ce que le corps alvéolaire (10 ; 20) a une résistance électrique d'ensemble de 0,01 à 1 ohm.

8. Corps alvéolaire selon l'une quelconque des revendications précédentes, caractérisé en ce que la zone (18 ; 28) ayant la résistivité électrique la plus élevée a une résistivité électrique qui est au moins à peu près le double de la zone (48 ; 58) de résistivité électrique la plus faible.

9. Procédé destiné à la fabrication d'un corps alvéolaire comportant des zones (18, 48 ; 28, 58) ayant différentes résistivités électriques selon l'une quelconque des revendications précédentes, caractérisé par les phases ci-après :
a) deux différentes masses (M1, M2) de poudre métallique ou d'un mélange de poudre métallique et de poudre céramique sont introduites dans une extrudeuse (30), et en l'occurrence l'une dans la zone intérieure (32) et l'autre dans la zone extérieure (31) entourant la zone intérieure (32) ;
b) les différentes masses (M1, M2) sont extrudées ensemble en un corps alvéolaire monolithique (10 ; 20) ;
c) le corps alvéolaire extrudé (10 ; 20) est cuit ou fritté, ou le cas échéant soumis à un traitement physico-chimique différent en fonction des zones ;
d) le corps alvéolaire extrudé (10 ; 20) est pourvu de fentes décalées (13, 14 ; 23, 24).
